**Europäisches Patentamt**

**European Patent Office**

**Office européen des brevets**

(11) Veröffentlichungsnummer: **0 508 254 A1**

# EUROPÄISCHE PATENTANMELDUNG

(21) Anmeldenummer: **92105434.2**

(22) Anmeldetag: **30.03.92**

(51) Int. Cl.5: **F26B 3/28**, F26B 13/20

(30) Priorität: **12.04.91 CH 1105/91**

(43) Veröffentlichungstag der Anmeldung:
**14.10.92 Patentblatt 92/42**

(84) Benannte Vertragsstaaten:
**AT BE CH DE ES FR GB IT LI NL SE**

(71) Anmelder: **VAN BRANDWIJK SYSTEMS PROGRAMMING B.V.**
**Javastraat 107**
**NL-2585 AH 's-Gravenhage(NL)**

(72) Erfinder: **Baldinger, Hansjörg**
**am Schützenweg 7**
**CH-5702 Niederlenz(CH)**

(74) Vertreter: **Patentanwälte Schaad, Balass & Partner**
**Dufourstrasse 101 Postfach**
**CH-8034 Zürich(CH)**

(54) **Verfahren und Vorrichtung zur Wärmebehandlung einer mit einer flüssigen oder pastenförmigen Zubereitung versehenen Warenbahn.**

(57) Die Wärmebehandlung einer Warenbahn erfolgt in einer Behandlungskammer (1), in welcher Einrichtungen (4) zum Warmluftausblasen und Strahlungsheizkörpern (5) zur Beaufschlagung der Warenbahn mit Strahlungswärme jeweils einander gegenüberstehend angeordnet sind und die Warenbahn (3) zwischen diesen hindurchgeführt ist. In Transportrichtung der Warenbahn ist die Anordnung der Luftausblaseinrichtungen (4) und der Strahlungsheizkörper (5) bezüglich der Lage oberhalb und unterhalb der Warenbahn abwechselnd vertauscht. Diese Anordnung erlaubt den Transport mittels Luft, die für Trocknung und Aushärtung beispielsweise einer mit Harz imprägnierten Warenbann sorgt. Die Anordnung ermöglicht eine Reduktion der Baulänge herkömmlicher Behandlungskammern.

Fig.1

Die Erfindung betrifft ein Verfahren zur Wärmebehandlung einer mit einer flüssigen oder pastenförmigen Zubereitung versehenen Warenbahn und eine Vorrichtung zur Durchführung eines derartigen Verfahrens nach dem Oberbegriff von Anspruch 1 bzw. Anspruch 9.

Ein derartiges Verfahren und eine derartige Vorrichtung sind aus der GB-PS 12 34 956 bekannt. Bei dem vorbekannten Verfahren wird eine mit einer flüssigen Zubereitung versehene Warenbahn in einer Behandlungskammer mittels Wärmestrahlung und Warmluft behandelt. Die Behandlungskammer ist vertikal angeordnet. Die Warenbahn läuft in der Form eines umgekehrten U durch die Behandlungskammer hindurch. Die Behandlungsluft wird im Gegenstrom zur Warenbahn geführt. Sie wird seitlich eingeblasen. In der Behandlungskammer ist auf jeweils beiden Seiten der Warenbahn eine Vielzahl von Heizrohren angebracht, die von heissem Dampf durchströmt werden.

Aus der DD-PS 212 574 ist ein Verfahren zur Trocknung und Vernetzung von auf Flächengebilden aufgebrachten Polymeren bekannt, das insbesondere zur Trocknung und Teilvernetzung von mit Polymerbindemitteln getränkten Trägermaterialien zur Prepregherstellung dient. Der Trockner wird von einem Luftstrom durchströmt. Um die zugeführte Wärmeenergie weitgehend nur zur Lösungsmittelverdampfung und zur weiteren Aufheizung der Prepregbahn zu nutzen und hierdurch wesentliche Energieeinsparungen zu erreichen, wird der in den Trockner an einem Eintrittsschlitz eintretende Luftstrom in einen Hauptluftstrom und in einen wesentlich geringeren Luftstrom geteilt. Der Hauptluftstrom ist unbeheizt und wird durch einen äusseren Trocknerraum geführt. Der andere, wesentlich geringere Luftstrom tritt in einen inneren Trocknerraum ein und wird durch Heizplatten aufgeheizt. Die Heizplatten dienen also dazu, den Luftstrom aufzuheizen.

Ferner sind Schwebetrockner für die Wärmebehandlung einer Warenbahn bekannt, die beispielsweise für die Herstellung von sogenannten Prepregs eingesetzt werden. Bei einem Prepreg handelt es sich um ein mit einem härtbaren Harz versehenes Flächengebilde, auf dem das in Form einer Lösung oder Dispersion aufgebrachte Kunstharz bis zu einem bestimmten Grad durch eine chemische Reaktion ausgehärtet ist. Die verwendungstechnischen Eigenschaften eines Prepregs werden durch den Härtungszustand bestimmt, so dass die Härtungsreaktion sehr sorgfältig und genau zum gewünschten Härtungsgrad geführt werden muss. Insbesondere ist eine konstante Qualität und damit ein konstanter Härtungsgrad über das ganze Flächengebilde erwünscht.

Bei einem Schwebetrockner wird die Warenbahn durch ein Warmluftpolster in der Schwebe gehalten und die vorstehend erwähnte Härtungsreaktion erfolgt durch die Warmluft. Die Erzielung einer gleichmässigen Temperaturverteilung über die Breite der Warenbahn ist jedoch mit Warmluft nicht ausreichend gewährleistet, auch wenn die Warenbahn auf beiden Seiten mit Warmluft beaufschlagt wird. Bei einem Prepreg hängt der Aushärtungsgrad nicht nur von der Lufttemperatur allein, sondern auch von der Luftgeschwindigkeit ab, mit der die Wärme auf die Warenbahn aufgebracht wird. Daher muss auch eine gleichmässige Ausblasgeschwindigkeit der Luft erzielt werden. Dies ist jedoch bei Luftgeschwindigkeiten von 8 bis 40 m/sec., insbesondere bei breiten Anlagen, nicht ausreichend beherrschbar. Wenn beispielsweise bei einer Warenbreite von 3 m die Luftgeschwindigkeit um +/-3 % variiert, ist die daraus resultierende Variation im Aushärtungsgrad des Prepregs nicht mehr akzeptabel. Die bekannten Schwebetrockner genügen daher nicht mehr, wenn hohe Qualitätsanforderungen gestellt werden.

Der Erfindung lag daher die Aufgabe zugrunde, ein Verfahren und eine Vorrichtung der eingangs genannten Art zu schaffen, mit der aus einer bestimmungsgemäss behandelten Warenbahn hohen Qualitätsansprüchen genügende Produkte hergestellt werden können. Die Vorrichtung soll ausserdem möglichst kostengünstig herstellbar sein und Einsparungsmöglichkeiten im Energieverbrauch bieten.

Erfindungsgemäss wird diese Aufgabe durch die kennzeichnenden Merkmale von Anspruch 1 bzw. Anspruch 9 gelöst. Bevorzugte Ausführungsformen der Erfindung sind Gegenstand der abhängigen Ansprüche. Gemäss Verfahren wird die durch die Behandlungskammer geführte Warenbahn in einem Abschnitt ihrer Transportstrecke mit vorgewärmter Luft angeblasen. Eine hierbei nicht ausreichend gleichmässige Temperaturverteilung wird dadurch kompensiert, dass in dem gleichen Transportstreckenabschnitt die gegenüberliegende Seite der Warenbann mit Strahlungswärme beaufschlagt wird. Dies erfolgt mittels Strahlungsheizkörpern mit einer zur Warenbahn parallelen Heizfläche, die sich sehr dicht vor der Warenbahn befinden kann.

In der Behandlungskammer sind vorzugsweise eine Mehrzahl von Luftdüseneinrichtungen in Abständen voneinander unterhalb der Warenbahn und versetzt dazu in den gleichen Abständen voneinander oberhalb der Warenbahn angeordnet, so dass in den vorhandenen Zwischenräumen auf beiden Seiten der Warenbahn, die ebenfalls zueinander versetzt sind, jeweils ein Strahlungsheizkörper angeordnet ist. Mit dieser Anordnung sind sehr gute Ergebnisse, beispielsweise hinsichtlich der Gleichmässigkeit der Aushärtung, erzielt worden. Ein weiterer Vorteil besteht auch darin, dass aufgrund der abwechselnden Anordnung von Strahlungsheizkörpern und Luftdüseneinrichtungen die Behandlungskammer im Vergleich zu die gleiche Aufgabe erfüllenden bekannten Behandlungskammern kürzer gebaut werden kann.

Die Führung der Warenbahn kann horizontal aber auch vertikal durch eine entsprechend ausgebildete Behandlungskammer erfolgen. Das Verfahren und die Vorrichtung eignen sich für die Herstellung von Prepregs auch auf Basis von Vliesen und Geweben und zur Behandlung von anderen mit einer flüssigen Zubereitung versehenen Warenbahnen, zum Beispiel von beschichteten oder bedruckten Metallbahnen und von imprägnierten oder gestrichenen Papierbahnen. Die Beschichtung der Warenbann kann auf verschiedene Weise aufgebracht worden sein, beispielsweise durch Beschichten, Rakeln oder auf andere Weise.

Ein Ausführungsbeispiel des Erfindungsgegenstandes wird nachfolgend anhand der Zeichnungen näher erläutert. Es zeigen:

Figur 1 schematisch eine Seitenansicht der für die Wärmebehandlung einer Warenbahn notwendigen Einrichtungen;

Figur 2 eine Draufsicht auf die Darstellung gemäss Figur 1;

Figur 3 in grösserem Massstab ein Detail als Querschnitt durch die Warenbahn gemäss der Linie 1-1 in Figur 1.

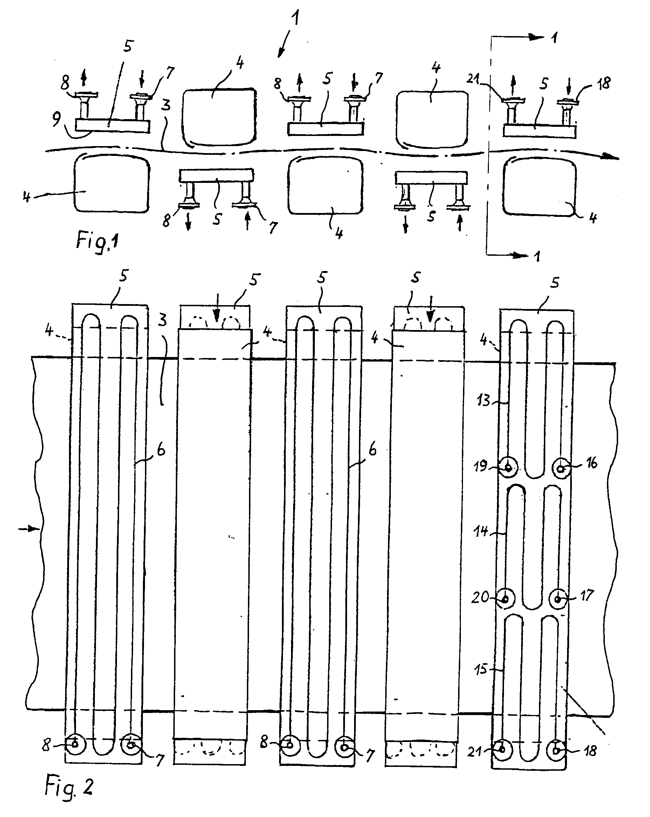

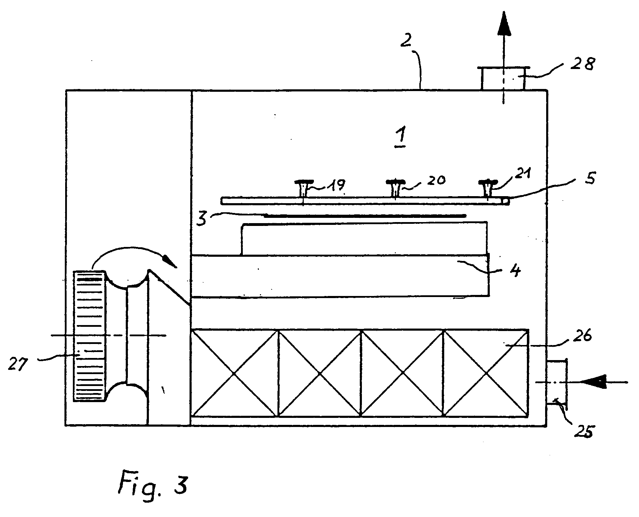

In einer Behandlungskammer 1, die in Figur 1 und 2 nicht dargestellt ist und die mit ihren Wänden 2 in Figur 3 dargestellt ist, ist unterhalb der durch die Behandlungskammer 1 hindurchgeführten Warenbahn 3 eine Luftdüseneinrichtung 4 zum Ausblasen von Warmluft quer zur Transportrichtung der Warenbahn 3 angeordnet, die aus Figur 2 hervorgeht. Im in der Zeichnung nach rechts folgenden Transportstreckenabschnitt der Warenbahn 3 ist eine gleiche Luftdüseneinrichtung 4 oberhalb der Warenbahn 3 angeordnet. Im darauf folgenden Transportstreckenabschnitt der Warenbahn ist eine gleiche Luftdüseneinrichtung 4 wieder unterhalb der Warenbahn 3 angeordnet, und in dieser Weise sind diese Einrichtungen zum Ausblasen von Warmluft immer abwechselnd oberhalb und unterhalb der Warenbahn angeordnet. Unmittelbar gegenüberstehend der ersten Luftdüsenanordnung 4 ist oberhalb der Warenbahn 3 ein Strahlungsheizkörper 5 angeordnet. Der Strahlungsheizkörper 5 weist eine Heizschlange 6 auf, die gemäss Figur 2 einen Heizmitteleintritt 7 und einen Heizmittelaustritt 8 besitzt. Der Stahlungsheizkörper 5 besitzt eine glatte, ebene, der Warenbahn 3 zugewandte Strahlungsheizfläche 9. Ein Strahlungsheizkörper 5 der gleichen Art ist in dem nach rechts folgenden Transportstreckenabschnitt unterhalb der Warenbahn 3 angeordnet und ebenfalls gegenüber einer oberhalb der Warenbahn angeordneten Luftdüseneinrichtung 4. Die in Transportrichtung folgenden Strahlungsheizkörper 5 sind ebenfalls abwechselnd oberhalb und unterhalb der Warenbahn 3 angeordnet.

Bei dem in Transportrichtung letzten Strahlungsheizkörper 5 ist dargestellt, dass ein solcher Strahlungsheizkörper auch quer zur Transportrichtung der Warenbahn 3 in unterschiedliche Heizzonen 10, 11 und 12 unterteilt sein kann. Jede dieser Heizzonen weist eine eigene von den anderen unabhängige Heizschlange 13, 14 und 15 auf, die entsprechend einen eigenen Heizmitteleintritt 16, 17 und 18 und einen Heizmittelaustritt 19, 20 und 21 aufweisen. Diese Ausgestaltung erlaubt eine über die Breite der Warenbahn unterschiedliche Erwärmung und ermöglicht eine besondere Gleichmässigkeit des Härtungsgrades über die gesamte Warenbannfläche zu erzielen. In Figur 2 sind die einzelnen Heizzonen 10, 11 und 12 gleich breit, sie können jedoch auch unterschiedliche Breite aufweisen, beispielsweise kann eine schmalere mittlere Heizzone zwischen zwei breiteren äusseren Heizzonen liegen. Jede andere Unterteilung ist ebenfalls möglich und kann bei allen vorhandenen Strahlungskörpern vorgesehen sein.

Die in der Zeichnung dargestellte Anlage arbeitet nach dem Tragflügelprinzip. Die Warenbann 3 kann horizontal oder auch vertikal durch eine entsprechend ausgebildete Behandlungskammer hindurch geführt werden.

In Figur 3 ist gemäss der Linie 1-1 in Figur 1 schematisch die Anordnung der Einrichtungen innerhalb der von den Wänden 2 zur Behandlungskammer 1 dargestellt. Die Luftdüseneinrichtungen 4 werden vorzugsweise mit einem Gemisch von Frischluft und Umluft gespeist. Die Frischluft gelangt durch einen Frischlufteinlass 25 in den Filter 26 und wird über einen Wärmetauscher oder einen Direktbrenner einem Umluftventilator 27 zugeführt und mit Umluft vermischt. Mit diesem Luftgemisch werden alle Luftdüseneinrichtungen 4 versorgt. Die Abluft wird aus der Behandlungskammer 1 durch einen Luftaustritt 28 weggeführt.

Die Luftdüseneinrichtungen 4 und die Strahlungsheizkörper 5 können in bezug auf ihren Abstand von der Warenbahn 3 verstellbar angeordnet sein. Da die Warenbann 3 aufgrund der Art ihrer Förderung in einer etwas gewellten Linie durch die Behandlungskammer transportiert wird, können die Oberflächen 9 der Strahlungsheizkörper 5 auch entsprechend gewölbt sein, um einen immer gleichbleibenden Abstand zur Warenbahn einzuhalten, wenn besondere Anforderungen an das Ergebnis der Behandlung dies erforderlich machen.

Das erfindungsgemässe Verfahren eignet sich für Warenbahnen aus Papier, Vlies oder Geweben und für die bekannten härtbaren Harztypen wie z. B. Phenol-, Epoxy- und Melaminharze.

Die für den jeweiligen Materialtyp erforderlichen Einzelbedingungen in der jeweiligen Anlage sind vom Trägermaterial der Warenbann, vom Harztyp, vom Harzauftrag und vom gewünschten Härtungsgrad abhängig und werden vom Fachmann nach Vorversuchen problemlos eingestellt.

Im allgemeinen wird mit Ausblasgeschwindigkeiten von 5 bis 50 m/sec. gearbeitet. Die Lufttemperatur liegt vorteilhaft 20º bis 25ºC unterhalb der Temperatur der Strahlungsheizkörper.

Nachfolgend werden als Beispiel die Betriebsbedingungen bei der erfindungsgemässen Herstellung eines Prepregs angegeben:

| Warenbahn: | Papier 180 g/m2 (roh) |
|---|---|
| Harz: | Phenolharz |
| Harzauftragsgewicht: | 60 % trocken |
| Warenbahngeschwindigkeit: | 40 m/min. |
| Lufttemperatur: | 180ºC |
| Luftgeschwindigkeit: | 20 m/sec. |
| Temperatur Stranlungsheizkörper: | 200ºC |

**Patentansprüche**

1. Verfahren zur Wärmebehandlung einer mit einer flüssigen oder pastenförmigen Zubereitung versehenen Warenbahn in mindestens einer Behandlungskammer mittels Wärmestrahlung und Warmluft, dadurch gekennzeichnet, dass die eine Seite der Warenbahn in mindestens einem Abschnitt ihrer Transportstrecke mit vorgewärmter Luft angeblasen wird und in dem gleichen Transportstreckenabschnitt die gegenüberliegende Seite der Warenbann mittels Strahlungswärme beaufschlagt wird.

2. Verfahren nach Anspruch 1, dadurch gekennzeichnet, dass in aufeinanderfolgenden Transportstreckenabschnitten der Warenbahn das Anblasen mit vorgewärmter Luft wechselweise von der einen Seite und im nächsten Abschnitt von der gegenüberliegenden Seite aus und das Beaufschlagen mit Strahlungswärme ebenfalls wechselweise von der einen Seite und der gegenüberliegenden Seite und jeweils dem Anblasen mit Luft gegenüber durchgeführt wird.

3. Verfahren nach Anspruch 1 oder 2, dadurch gekennzeichnet, dass die Warenbahn in der Behandlungskammer durch das Anblasen mit warmer Luft in der Schwebe gehalten wird.

4. Verfahren nach einem der vorhergehenden Ansprüche, dadurch gekennzeichnet, dass die Warenbahn horizontal oder vertikal durch die Behandlungskammer geführt wird.

5. Verfahren nach einem der vorhergehenden Ansprüche, dadurch gekennzeichnet, dass die Warenbahn mit über die Breite derselben abschnittweise eine unterschiedliche Temperatur aufweisender Strahlungswärme beaufschlagt wird.

6. Verfahren nach einem der vorhergehenden Ansprüche, dadurch gekennzeichnet, dass die Warenbahn über ihre Breite mit Strahlungswärme dreier unterschiedlicher Temperaturen erwärmt wird.

7. Verfahren nach einem der vorhergehenden Ansprüche, dadurch gekennzeichnet, dass die Strahlungstemperatur höher, vorzugsweise mindestens 15ºC höher als die Lufttemperatur ist.

8. Verfahren nach einem der vorhergehenden Ansprüche, dadurch gekennzeichnet, dass die Warenbahn mit einem härtbaren Harz, insbesondere einem härtbaren Kunstharz imprägniert ist.

9. Vorrichtung zur Wärmebehandlung einer mit einer flüssigen oder pastenförmigen Zubereitung versehenen Warenbahn, mit einer Behandlungskammer, in der mindestens ein Strahlungsheizkörper und mindestens eine Einrichtung zum Warmluftausblasen angeordnet sind, dadurch gekenndzeichnet, dass eine Luftdüseneinrichtung (4) für Warmluft und ein Strahlungsheizkörper (5) bezüglich der zwischen diesen hindurchzuführenden Warenbahn (3) jeweils einander gegenüberstehend in der Behandlungskammer (1) angeordnet sind.

10. Vorrichtung nach Anspruch 9, dadurch gekennzeichnet, dass eine Mehrzahl von Luftdüseneinrichtungen (4) für Warmluft in aufeinanderfolgenden Transportstreckenabschnitten der Warenbahn (3) abwechselnd auf der einen und auf der gegenüberliegenden Seite der Warenbahn und die Strahlungsheizkörper (5) jeweils einer Luftdüseneinrichtung (4) gegenüberstehend ebenfalls abwechselnd auf der einen und der gegenüberliegenden Seite der Warenbann angeordnet sind.

11. Vorrichtung nach einem der Ansprüche 9 oder 10, dadurch gekennzeichnet, dass die Strahlungsheizkörper (5) quer zur Transportrichtung der Warenbann (3) in verschiedene Abschnitte (10, 11, 12) mit unterschiedlichen Temperaturen unterteilt sind und die Temperaturen unabhängig voneinander regelbar sind.

12. Vorrichtung nach einem der Ansprüche 9 bis 11, dadurch gekennzeichnet, dass die der Warenbahn (3) zugekehrte Oberfläche des Strahlungsheizkörpers (5) glatt ist.

13. Vorrichtung nach einem der Ansprüche 9 bis 12, dadurch gekennzeichnet, dass die Strahlungstemperatur des Strahlungsheizkörpers (5) höher, vorzugsweise um mindestens 15°C höher als die Lufttemperatur ist.

14. Vorrichtung nach einem der Ansprüche 9 bis 11, dadurch gekennzeichnet, dass die Behandlungskammer (1) für einen horizontalen oder vertikalen Durchlauf der Warenbahn (3) ausgebildet ist.

15. Vorrichtung nach einem der Ansprüche 9 bis 14, dadurch gekennzeichnet, dass die Behandlungskammer (1) als Schwebetrockner ausgebildet ist.

EP 0 508 254 A1

Fig. 1

Fig. 2

Fig. 3

Europäisches Patentamt

# EUROPÄISCHER RECHERCHENBERICHT

Nummer der Anmeldung

EP 92 10 5434

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 346 081 (W.R. GRACE & CO)<br>* Spalte 7, Zeile 46 - Zeile 49; Abbildung 11 *<br>--- | 1-15 | F26B3/28<br>F26B13/20 |
| X | WO-A-8 705 644 (VALMET PAPER MACHINERY INC.)<br>* Seite 9, Zeile 21 - Zeile 26; Anspruch 13; Abbildungen 1,2 *<br>--- | 1-15 | |
| X | EP-A-0 383 484 (EASTMAN KODAK COMPANY)<br>* Spalte 2, Zeile 16 - Zeile 29; Abbildung 1 *<br>--- | 1,4,9,14 | |
| A | WO-A-8 904 890 (VALMET OY)<br><br>* Seite 12, Zeile 11 - Zeile 19; Abbildung 2A *<br>--- | 3-7,<br>11-15 | |
| A | EP-A-0 157 403 (SINTER LIMITED)<br><br>* Seite 11, Zeile 9 - Zeile 19; Ansprüche 11-15; Abbildungen 1,4 *<br><br>----- | 5,6,11,<br>12 | |

**RECHERCHIERTE SACHGEBIETE (Int. Cl.5)**

B29C
F26B

Der vorliegende Recherchenbericht wurde für alle Patentansprüche erstellt

| Recherchenort | Abschlußdatum der Recherche | Prüfer |
|---|---|---|
| DEN HAAG | 24 JUNI 1992 | SCHöLVINCK T.S. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument